# FASCICULE DE BREVET EUROPEEN

(11) **EP 1 008 223 B1**
(45) Date de publication et mention de la délivrance du brevet: **26.04.2006**
(21) Numéro de dépôt: 99926543.2
(22) Date de dépôt: 25.06.1999
(51) Int. Cl.: H02K 1/22, H02K 21/04

(54) **MACHINE TOURNANTE, TEL QU'UN ALTERNATEUR POUR VEHICULE AUTOMOBILE**
ROTIERENDE MASCHINE WIE ZUM BEISPIEL DREHSTROMGENERATOR FÜR KRAFTFAHRZEUGE
ROTATING MACHINE, SUCH AS MOTOR VEHICLE ALTERNATOR

(30) Priorité: 25.06.1998 FR 9808073; 25.02.1999 FR 9902345
(43) Date de publication de la demande: 14.06.2000
(73) Titulaire: VALEO EQUIPEMENTS ELECTRIQUES MOTEUR, 94000 Créteil (FR)
(72) Inventeur: AKEMAKOU, Dokou, Antoine, F-94400 Vitry-sur-Seine (FR); PELLE, Eric, F-94700 Maisons-Alfort (FR)
(74) Mandataire: Le Forestier, Eric
(86) Numéro de dépôt international: PCT/FR1999/001534
(87) Numéro de publication internationale: WO 1999/067871

(56) Documents cités:
- EP-A- 0 431 514
- WO-A-96/30992
- DE-A- 4 033 454
- US-A- 4 188 554
- US-A- 4 339 874
- US-A- 5 157 297
- PATENT ABSTRACTS OF JAPAN vol. 018, no. 635 (E-1638), 5 décembre 1994 (1994-12-05) -& JP 06 245419 A (HONDA MOTOR CO LTD), 2 septembre 1994 (1994-09-02)
- K.J. BINNS ET AL.: " Choice of parameters in the hybrid permanent-magnet synchronous motor" PROCEEDINGS OF THE INSTITUTION OF ELECTRICAL ENGINEERS., vol. 126, no. 8, mars 1979 (1979-03), pages 741-744, XP002109283 INSTITUTION OF ELECTRICAL ENGINEERS. STEVENAGE., GB

## Description

La présente invention a trait d'une façon générale aux machines tournantes telles que les alternateurs pour véhicules automobiles.

La génératrice mono ou polyphasée que constitue un alternateur classique de véhicule automobile comporte généralement un stator à l'intérieur duquel tourne un rotor pourvu d'un bobinage d'excitation. Ce bobinage est alimenté par des balais en contact avec deux bagues collectrices prévues sur une partie en saillie de l'arbre du rotor.

On connaît déjà notamment par EP-A-0 707 374 des machines tournantes dans lesquelles, en vue notamment d'accroître leur rendement, le champ d'excitation du rotor est réalisé à la fois par des aimants permanents et par des bobines (on parle en général d'excitation « mixte »), et dans lesquelles on contrôle le courant délivré par l'induit à l'aide de moyens de commutation au niveau des bobinages d'excitation, ces moyens de commutation permettant d'inverser sélectivement le sens de l'excitation pour diminuer, voire sensiblement annuler, le flux des aimants.

Cette nécessité d'inverser le sens du courant d'excitation impose d'utiliser un pont de commutation à semi-conducteurs dit en « H », dont le coût est élevé et qui grève donc le prix de revient de la machine.

On connaît également, notamment par la figure 19 de la demande de brevet WO96/30992, des structures de moteurs électriques dans lesquelles le rotor comporte:
- au moins deux aimants permanents d'excitation successifs qui dans le rotor engendrent deux flux magnétiques ayant tangentiellement le long de la structure rotorique des composantes de sens opposés selon la direction de déplacement du rotor,
- un nombre d'encoches pair entre ces aimants d'excitation, ainsi que des bobinages qui sont bobinés dans ces encoches et qui sont aptes à être alimentés dans un sens de pleine excitation ou en sens inverse pour définir des pôles alternés entre lesdites encoches.

Ces machines ne sont pas pleinement satisfaisantes dans la mesure où des encoches entre les aimants reçoivent des brins de deux bobinages successifs, chaque bobinage n'occupant dans une encoche que la moitié du volume de celle-ci.

En effet, le fait que chaque encoche entre les aimants reçoive des brins de deux bobinages successifs oblige à remplir à moitié les encoches directement accolées aux aimants. On a donc une dissymétrie de répartition d'ampères-tours dans les encoches des pôles bobinés ; les encoches directement accolées aux aimants ne reçoivent en valeur absolue que la moitié de la valeur absolue des ampères-tours des autres encoches.

Cette dissymétrie magnétique modifie la répartition habituelle des lignes de champ magnétique (comparativement à des machines bobinées à pôles saillants, on a des machines uniquement à aimants) entraînant des saturations précoces dans la culasse ou nécessitant un surdimensionnement de la culasse.

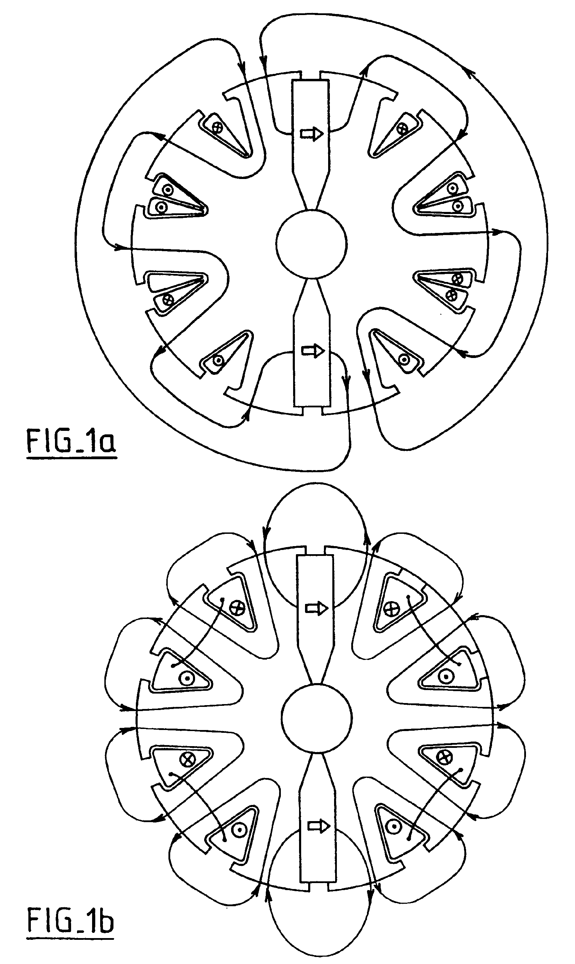

C'est ce qu'illustre la figure 1 a sur laquelle on a représenté le rotor d'une machine du type de celles proposées dans la demande de brevet WO96/30992, ainsi que les lignes selon lesquelles le flux magnétique se referme lorsque les bobinages dans les encoches du rotor sont alimentés dans leur sens de plein excitation.

Un but de l'invention est de pallier cet inconvénient.

Il a déjà été proposé par la demanderesse dans sa demande FR 98 02886 (dont on notera qu'elle ne fait pas partie de l'état de la technique à prendre en considération pour apprécier l'activité inventive de l'invention - publication FR 2 775 849) un alternateur dont le courant d'induit est régulé en jouant sur l'excitation de bobines de rotor alimentées.

La structure décrite dans cette demande de brevet est du type de celle qui est illustrée sur les figures 1 b, 2a et 2b. Elle comporte un stator 1 et un rotor 2.

Le stator 1 possède une carcasse 12 définissant une structure annulaire à la périphérie intérieure de laquelle est ménagée une pluralité d'encoches 13 qui sont définies entre des pôles 15 du rotor et qui reçoivent des brins de bobinage d'induits 14.

Par brin on entend ici et dans tout le présent texte un ensemble constitué par la ou les différentes portions de spires d'un même bobinage reçues dans une même encoche.

Le rotor 2 possède une carcasse 22 sur laquelle sont également ménagées une pluralité d'encoches 23 qui définissent des pôles 25 et qui reçoivent des aimants permanents 27 dont les lignes de flux sont orientées tangentiellement le long de la structure rotorique, ainsi que des brins de bobinages d'excitation 26.

On trouve ainsi en succession dans les encoches 23 adjacentes du rotor :
- un aimant 27 ayant une première polarité,
- deux brins d'un bobinage 26 bobiné sur un pôle 25 et reçu dans deux encoches adjacentes,
- un deuxième aimant 27 ayant une seconde polarité opposée à la première,
- à nouveau deux brins d'un bobinage 26, aptes à être traversés par des courants inverses de ceux circulant dans les brins du bobinage 26 précédent, etc.

Le nombre de pôles au rotor et au stator est par exemple identique et égal à 12.

Avec une telle structure, le rotor adopte, en l'absence de courants dans les brins 26, un schéma de polarité ... S-N-N-N-S-S-S-N-N-N, etc. (figure 2a).

Ainsi, en l'absence de courant dans les bobinages 26, le schéma de polarité N-S a un pas qui est égal à trois fois le pas des dents (pôles 25) du rotor et l'énergie transférée entre le rotor et le stator est minimale.

Par contre, lorsqu'un courant circule dans les bobinages du rotor, les polarités de celui-ci deviennent alors ... N-S-N-S-N-S, etc. avec un pas qui correspond à celui des dents du rotor ; une énergie magnétique plus importante, qui croît avec l'intensité du courant d'excitation, est transférée entre le stator et le rotor.

On a représenté sur les figures 1 b et 2b les lignes selon lesquelles le flux se referme dans le cas où les brins sont alimentés dans leur sens d'excitation. Comme l'illustre clairement ces figures, ces lignes de flux se referment alors chacune à travers deux pôles successifs.

On a également représenté sur la figure 2a les lignes de flux en absence de courant d'excitation.

Pour limiter les fuites du flux magnétique et empêcher que le flux des aimants ne se referme sur l'arbre de la machine, il est proposé dans FR 98 02 886 de réaliser l'arbre du rotor en un matériau amagnétique et de conformer cet arbre et les tôles du rotor de façon à réduire autant que possible l'épaisseur de la carcasse au dessous des aimants.

Toutefois, l'utilisation de matériaux amagnétiques (titane par exemple) peut entraîner des surcoûts de fabrication importants.

En outre, des contraintes de tenue mécanique empêchent de réduire l'épaisseur de la carcasse entre les aimants et l'arbre du rotor autant qu'il serait souhaitable.

Un autre but de l'invention est de pallier ces inconvénients.

L'invention propose quant à elle une machine électrique comportant un stator et un rotor, le stator comportant au moins un bobinage d'induit logé dans au moins une paire d'encoches, le rotor comportant au moins deux aimants d'excitation successifs qui dans le rotor engendrent deux flux magnétiques ayant, tangentiellement le long de la structure rotorique, des composantes de sens opposés, ledit rotor présentant entre ces deux aimants un nombre d'encoches pair qui définissent entre elles des pôles saillants et dans lesquelles sont reçus des brins de bobinage(s) qui sont aptes à être alimentés pour définir avec les aimants des pôles alternés, caractérisé en ce que chacune des encoches qui reçoivent les brins de bobinage(s) n'est occupée que par un seul brin ou plusieurs brins bobinés autour d'un même pôle saillant et en ce que l'arbre du rotor est en un matériau magnétique, ladite machine comportant au voisinage dudit arbre et des aimants au moins une zone amagnétique qui minimise ou supprime les flux de fuite vers l'arbre du rotor.

En particulier, selon un mode de réalisation préférée, la carcasse du rotor présente une pluralité de trous qui s'étendent au voisinage de l'arbre du rotor et qui sont répartis entre les aimants, ces trous constituant des zones amagnétiques qui définissent de part et d'autre des aimants, des surfaces d'étranglements limitant les fuites de flux vers l'arbre.

Dans un autre mode de réalisation encore, l'arbre présente un revêtement amagnétique qui constitue une entretoise le séparant des aimants.

Avantageusement alors, les tôles qui constituent la carcasse du rotor sont constituées de n secteurs indépendants juxtaposés angulairement, où n est le nombre d'aimants permanents, des moyens permettant de maintenir lesdits secteurs les uns par rapport aux autres.

Une telle machine est avantageusement complétée par les différentes caractéristiques suivantes prises seules ou selon toutes leurs combinaisons possibles :
- les encoches qui reçoivent les aimants se terminent à leur extrémité la plus proche du rotor par une ouverture élargie de forme incurvée ;
- une telle ouverture d'extrémité a une forme qui présente des replis de part et d'autre de l'aimant reçu dans l'encoche qu'elle termine ;
- les bords des trous et des encoches du rotor qui reçoivent les aimants sont sensiblement parallèles sur une certaine portion.

D'autres caractéristiques et avantages de l'invention ressortiront encore de la description qui suit. Cette description est purement illustrative et non limitative. Elle doit être lue en regard des dessins annexés sur lesquels :
- la figure 1a, déjà analysée, est une représentation schématique en coupe du rotor d'une machine du type de celles proposées dans la demande de brevet WO96/30992 ;
- la figure 1 b, déjà analysée, est une représentation schématique en coupe du rotor d'une machine du type de celle décrite dans la demande de brevet FR 98 02886 (Publication FR 277 5849);
- les figure 2a et 2b, déjà analysées, sont des représentations schématiques en développé du rotor et du stator de la même machine, sur lesquelles on a représenté les lignes de flux en l'absence ou non d'excitation sur les bobinages du rotor ;
- la figure 3 est une représentation schématique en développé du rotor d'une machine conforme à un mode de réalisation possible de l'invention ;
- la figure 4 est une représentation en vue en coupe transversale du rotor de la machine de la figure 2 ;
- la figure 5.est une représentation schématique similaire à celle de la figure 2 illustrant un autre mode de réalisation possible pour l'invention ;
- la figure 6 est une représentation schématique en développé du rotor d'une machine conforme à un autre mode de réalisation possible de l'invention ;
- la figure 7 est une représentation schématique en vue en coupe transversale du rotor d'une machine conforme à un autre mode de réalisation possible de l'invention;
- la figure 8 est une représentation schématique en vue en coupe transversale d'un rotor conforme à un mode de réalisation particulièrement avantageux de l'invention.

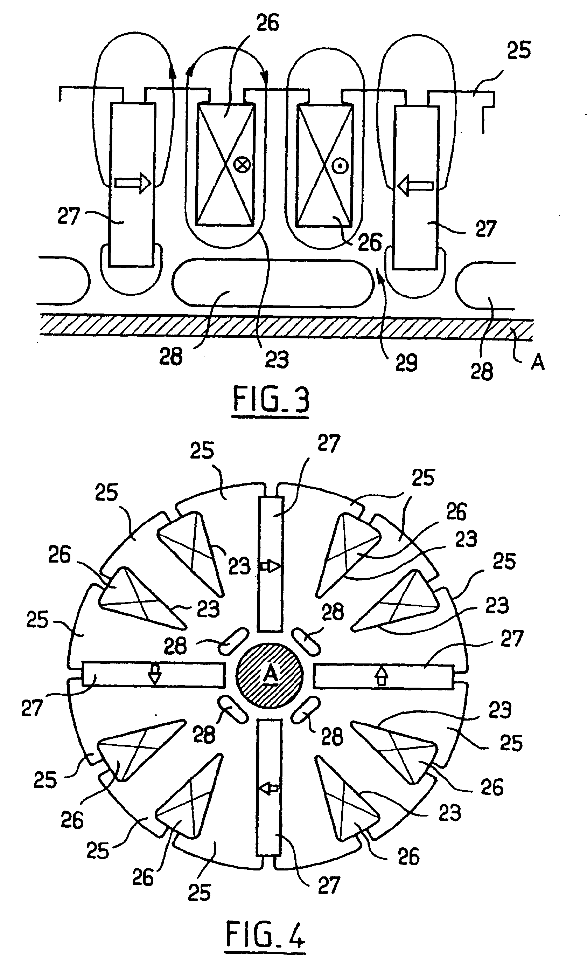

La machine dont le rotor est illustré sur les figures 3 et 4 comporte un stator monophasé qui est analogue à celui de la machine illustrée sur la figure 1 (et qui n'a pas été représenté pour ne pas alourdir les figures) ou un stator polyphasé. Elle comporte en outre un rotor 2 qui, de la même façon que celui de la machine illustrée sur la figure 1, comporte une carcasse de forme générale cylindrique dans laquelle sont ménagées une pluralité d'encoches 23 qui sont séparées par des dents ou pôles saillants 25 et qui reçoivent des aimants permanents 27 alternant avec des paires de brins d'un bobinage d'excitation 26.

Plus particulièrement, les aimants permanents 27 sont répartis avec une polarité alternée sur le pourtour du rotor 2, les flux générés par deux aimants 27 successifs ayant tangentiellement le long de la structure rotorique des composantes opposées selon la direction de déplacement du rotor 2.

En état d'excitation, le bobinage du rotor est alimenté de façon unidirectionnelle de telle sorte que le flux généré par le courant circulant dans les deux brins entre deux aimants permanents 27 successifs s'oppose respectivement aux flux desdits aimants 27. On passe ainsi d'une polarité N-N-N-S-S-S-etc. en l'absence d'excitation à une polarité N-S-N-S-etc. lorsque le bobinage 26 du rotor est excité dans un sens donné. On a porté sur la figure 3 le sens des courants d'excitation et les flux générés par les courants circulant dans les brins du bobinage 26.

En outre si les bobinages sont alimentés en sens inverse, on peut réduire voire annuler la force électromotrice du stator avec une polarité N₁N₂N₂S₁S₂S₁ où N₁ et N₂ (respectivement S₁ et S₂) correspondant à des intensités de flux différentes avec N₁ + N₁ = -S₂ et N₂ = - S₂ - S₂.

Des variantes de réalisation dans lesquelles le nombre d'encoches entre deux aimants successifs est un nombre pair supérieur à deux sont bien entendu envisageables.

Dans tous les cas, que le nombre d'encoches entre deux aimants soit de deux ou supérieur, chaque encoche 23 est occupée par les brins d'un seul bobinage, le nombre de bobinages 26 entre deux aimants étant égal (voir inférieur) à la moitié du nombre d'encoches entre lesdits aimants.

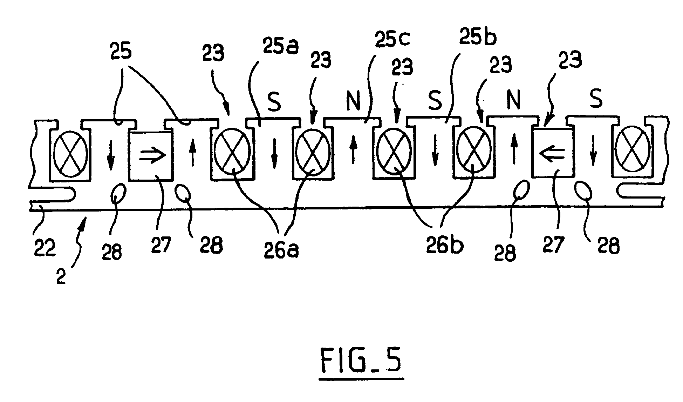

Ainsi, dans l'exemple illustré sur la figure 5, deux aimants 27 successifs sont séparés par quatre encoches 23. Deux bobinages 26a, 26b sont bobinés entre ces aimants 27. Ces bobinages 26a, 26b sont bobinés sur les pôles 25a, 25b de part et d'autre d'un pôle intermédiaire 25c, chaque encoche 23 n'étant de ce fait occupée que par un seul brin.

Avec les structures du type de celles qui viennent d'être décrites, on obtient ainsi une répartition de flux sans dissymétrie magnétique. Les flux sont parfaitement concentrés sur chaque pôle lorsque les bobinages sont alimentés et les flux de fuite d'un pôle à l'autre sont supprimés ou à tout le moins limités. Ceci permet un fonctionnement de puissance qu'il n'est pas possible d'atteindre avec les machines du type de celle présentée dans WO96/30992.

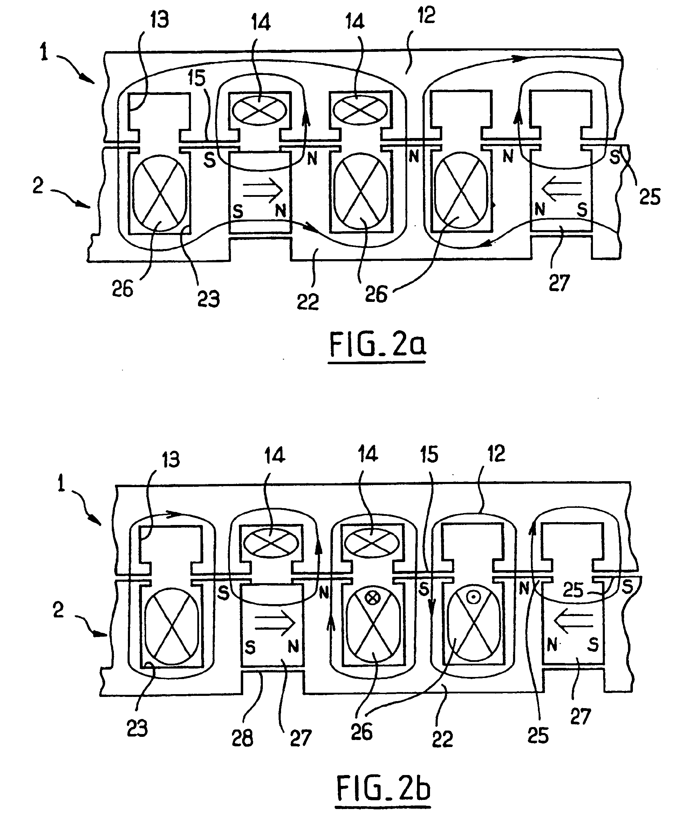

Par ailleurs, dans les modes de réalisation illustrés sur les figures 2 à 4, l'arbre du rotor, référencé par A, est un arbre cylindrique en un matériau magnétique, par exemple en acier.

Dans le mode de réalisation des figures 3 et 4, la carcasse présente quatre trous 28 oblongs qui s'étendent au voisinage de l'arbre A du rotor et qui sont répartis entre les aimants 27.

Dans le mode de réalisation de la figure 5, il est prévu des trous 28 s'étendant au voisinage des aimants 27, de part et d'autre de ceux-ci. Plus précisément, ces trous 28 présentent des formes légèrement allongées selon des directions qui s'étendent en biais vers l'axe A entre les bords desdits aimants 27 et les zones médianes des pôles 25 de part et d'autre desdits aimants 27.

Ces trous 28 constituent des zones amagnétiques qui définissent de part et d'autre des aimants 27, des surfaces d'étranglements 29 limitant les fuites de flux vers l'arbre A. L'épaisseur de la tôle sous l'aimant peut être alors grande sans nuire aux performances électriques de la machine.

En outre, la tenue mécanique d'une telle structure est renforcée par rapport à la tenue mécanique d'une structure du type de celle illustrée sur les figures 2a et 2b. Notamment, la zone plus épaisse sous un aimant et la zone d'étranglement 29 entre un trou 28 et un aimant 27 contribuent plus efficacement à la solidarisation d'un « secteur » de tôles par rapport au secteur immédiatement voisin. Ceci n'est pas le cas de la zone d'étranglement de faible épaisseur sous un aimant d'une structure du type de celle des figures 2a et 2b, zone susceptible de rompre aux grandes vitesses de rotation du rotor.

Les extrémités des trous 28 sont préférentiellement de forme arrondies. Des formes rectangulaires peuvent néanmoins être envisagées pour lesdits trous 28.

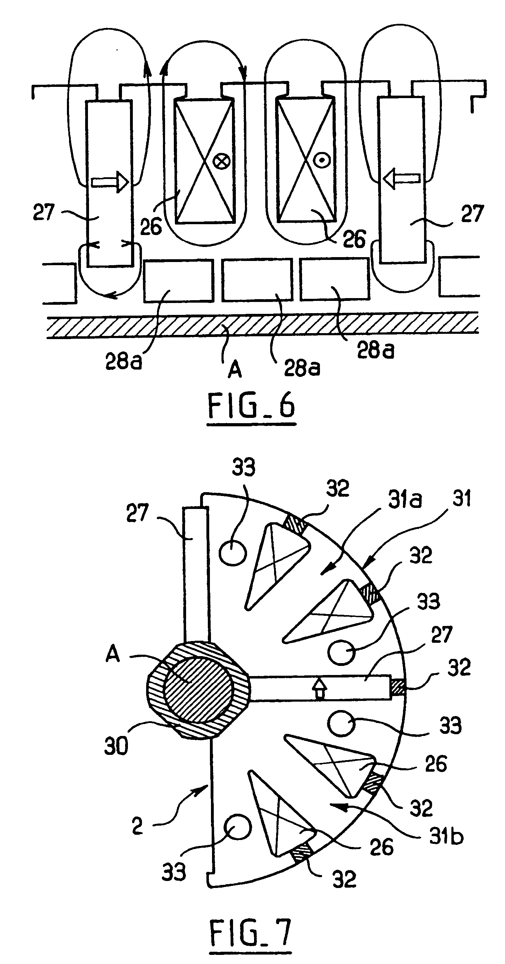

En variante, pour accroître encore la tenue mécanique de la structure, on peut remplacer un trou oblong 28 entre deux aimants 27 successifs par une pluralité de trous 28a (par exemple, deux, trois ou quatre). C'est ce qui a été illustré sur la figure 6.

La largeur qui sépare un trou 28a du trou 28a voisin ou de l'aimant 27 auquel il est juxtaposé est telle que les surfaces d'étranglement ainsi définies sont suffisantes pour limiter les fuites de flux vers l'arbre A du rotor.

Dans le mode de réalisation illustré sur la figure 7, un matériau amagnétique est interposé entre d'une part l'arbre magnétique A et d'autre part les aimants 27 et les tôles 31 de la carcasse. Par exemple, l'arbre magnétique A peut porter sur tout son pourtour un revêtement 30 en un matériau amagnétique (résine) qui définit une entretoise qui sépare ledit arbre A des aimants 27. En variante, il peut être emmanché dans un tube, par exemple en aluminium. L'entretoise peut porter extérieurement des épanchements définissant des queues d'aronde sur lesquelles les tôles 31 sont fixées, et peut comporter des épaulements en queue d'aronde qui aident à la tenue des tôles.

Dans l'un et l'autre de ces deux cas, les tôles 31 qui constituent la carcasse du rotor 2 sont alors constituées de n secteurs 31a, 31b, etc. indépendants juxtaposés angulairement, où n est le nombre d'aimants permanents, les encoches 23 recevant les aimants 27 étant définies par les formes en regard de deux secteurs 31 a, 31 b, etc. successifs. Les secteurs 31 a, 31 b, etc. constituent les dents ou pôles du rotor.

En l'absence des éléments formant queue d'aronde, ces secteurs 31 a, 31 b, etc. sont par exemple maintenus par un surmoulage 32 en une résine amagnétique, ou encore par des flasques d'extrémité en un matériau amagnétique, ces flasques coopérant avec des tirants magnétiques 33 traversant les tôles.

Ces deux moyens peuvent, comme cela a été représenté sur la figure 7, être utilisés simultanément.

Comme on l'aura compris, une structure du type de celle illustrée sur la figure 7 permet de résoudre totalement les problèmes de fuite de flux vers l'arbre A et d'éviter les problèmes de tenue mécanique qui peuvent se poser avec des structures du type de celle illustrée sur les figures 2a et 2b.

Bien entendu, la présente invention s'applique également à des alternateurs réalisant d'autres fonctions telle que la fonction démarrage du moteur thermique d'un véhicule automobile appelé « altemo-démarreur ».

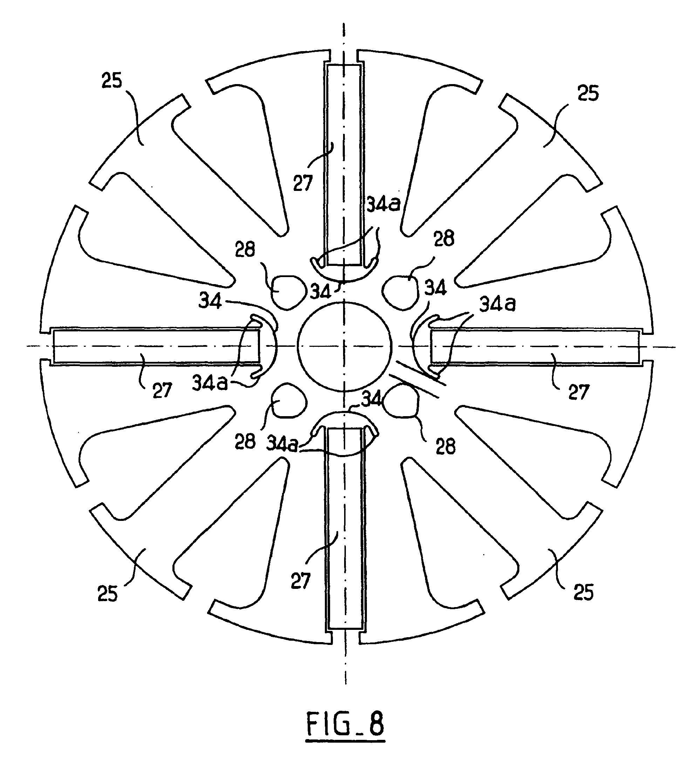

On se réfère maintenant au mode de réalisation illustré sur la figure 8.

Dans ce mode de réalisation particulièrement avantageux, les encoches des aimants 27 se terminent chacune à leur extrémité la plus proche de l'axe du rotor par une ouverture élargie 34 de forme générale incurvée qui se replie de part et d'autre des corps desdits aimants 27. Sur la figure 6, ces replis ont été référencés par 34a.

Les bords de cette ouverture 34 qui terminent les replis 34a ont une forme arrondie.

Les courbures et arrondis de cette ouverture 34 d'extrémité évitent l'amorçage de déchirures.

Les replis 34a de part et d'autre des aimants permettent quant à eux d'optimiser les lignes de champs de ceux-ci. Ainsi, les forces de cisaillement sont supprimées, et ne subsistent que des forces de traction. Ces forces de traction présentent une bonne tenue mécanique lors de la centrifugation.

Par ailleurs, les portions des bords de ces ouvertures 34 et les portions des trous 28 qui sont directement en regard sont sensiblement parallèles.

Ainsi, les zones d'étranglement définies entre lesdites ouvertures 34 d'extrémité et les trous 28 ont sensiblement une forme de barreaux à bords parallèles.

Les concentrations de contraintes en sont minimisées.

Comme on l'aura compris, une telle configuration permet d'optimiser la tenue mécanique à la centrifugation.

## Revendications

1. Machine électrique comportant un stator (1) et un rotor (2), le stator comportant au moins un bobinage d'induit (14) logé dans au moins une paire d'encoches (13), le rotor comportant au moins deux aimants d'excitation successifs qui dans le rotor engendrent deux flux magnétiques ayant, tangentiellement le long de la structure rotorique, des composantes de sens opposés, ledit rotor présentant entre ces deux aimants un nombre d'encoches pair qui définissent entre elles des pôles saillants et dans lesquelles sont reçus des brins de bobinage(s) qui sont aptes à être alimentés pour définir avec les aimants des pôles alternés, **caractérisé en ce que** chacune des encoches (23) qui reçoivent les brins de bobinage(s) (26) n'est occupée que par un seul brin ou plusieurs brins bobinés autour d'un même pôle saillant et **en ce que** l'arbre (A) du rotor est en un matériau magnétique, ladite machine comportant au voisinage dudit arbre (A) et des aimants (27) au moins une zone amagnétique (28, 28a ; 30) qui minimise ou supprime les flux de fuite vers l'arbre du rotor.

2. Machine selon la revendication 1, **caractérisée en ce que** la carcasse du rotor présente une pluralité de trous (28, 28a) qui s'étendent au voisinage de l'arbre du rotor et qui sont répartis entre les aimants (27), ces trous (28, 28a) constituant des zones amagnétiques qui définissent de part et d'autre des aimants, des surfaces d'étranglements limitant les fuites de flux vers l'arbre.

3. Machine selon la revendication 2, **caractérisée en ce qu'**elle comporte entre deux aimants (27) successifs un seul trou (28) qui est de forme oblongue.

4. Machine selon la revendication 2, **caractérisée en ce qu'**elle comporte plusieurs trous successifs (28a) entre deux aimants (27).

5. Machine selon la revendication 1, **caractérisé en ce qu'**une entretoise tubulaire amagnétique (30) est interposée entre l'arbre (A) et les aimants.

6. Machine selon la revendication 5, **caractérisée en ce que** les tôles qui constituent la carcasse du rotor sont constituées de n secteurs (31a, 31 b) indépendants juxtaposés angulairement, où n est le nombre d'aimants permanents, des moyens (32, 33) permettant de maintenir lesdits secteurs les uns par rapport aux autres.

7. Machine selon la revendication 6, **caractérisée en ce que** l'entretoise amagnétique est constituée par un revêtement porté par l'arbre (A).

8. Machine selon la revendication 6, **caractérisée en ce que** l'entretoise présente des épaulements en queue d'aronde.

9. Machine selon l'une des revendications 6 ou 7, **caractérisée en ce que** lesdits moyens comportent des flasques d'extrémité (33) en un matériau amagnétique, ces flasques coopérant avec des tirants magnétiques traversant les tôles.

10. Machine selon l'une des revendications précédentes, **caractérisée en ce que** les encoches (23) qui reçoivent les aimants (27) se terminent à leur extrémité la plus proche du rotor par une ouverture élargie (34) de forme incurvée.

11. Machine selon la revendication 10, **caractérisée en ce qu'**une telle ouverture d'extrémité a une forme qui présente des replis (34a) de part et d'autre de l'aimant reçu dans l'encoche qu'elle termine.

12. Machine selon la revendication 2, **caractérisée en ce que** les bords des trous (28) et des encoches (23) du rotor qui reçoivent les aimants (27) sont sensiblement parallèles sur une certaine portion.

13. Alternateur ou alterno-démarreur de véhicule automobile, **caractérisé en ce qu'**il est constitué par une machine selon l'une des revendications 1 à 12.

## Claims

1. An electric machine comprising a stator (1) and a rotor (2), the stator having at least one secondary winding (14) received in at least one pair of slots (13), the rotor having at least two successive excitation magnets which generate two magnetic fluxes in the rotor and having components in opposite tangential directions around the structure of the rotor, said rotor having an even number of slots between said two magnets, which slots define projecting poles between them and receive winding legs that are suitable for being powered to co-operate with the magnets to define alternating poles, said electric machine being **characterized in that** each of the slots (23) that receives the winding legs (26) is occupied only by a single leg or by a plurality of legs wound around the same projecting pole, and **in that** the shaft (A) of the rotor is made of a magnetic material, said machine including at least one non-magnetic zone (28, 28a; 30) in the vicinity of said shaft (A) and in the vicinities of said magnets (27), which non-magnetic zone minimizes or eliminates flux leakage towards the shaft of the rotor.

2. A machine according to claim 1, **characterized in that** the frame of the rotor is provided with a plurality of holes (28, 28a) which extend in the vicinity of the shaft of the rotor, and which are distributed between the magnets (27), said holes (28, 28a) constituting non-magnetic zones which define constriction areas on either side of each of the magnets, thereby limiting flux leakage to the shaft.

3. A machine according to claim 2, **characterized in that**, between two successive magnets (27), it is provided with a single hole (28) which is oblong in shape.

4. A machine according to claim 2, **characterized in that** it is provided with a plurality of successive holes (28a) between two magnets (27).

5. A machine according to claim 1, **characterized in that** a non-magnetic tubular spacer (30) is interposed between the shaft (A) and the magnets.

6. A machine according to claim 5, **characterized in that** each of the laminations that makes up the frame of the rotor is made up of n independent sectors (31 a, 31 b) that are angularly juxtaposed, where n is the number of permanent magnets, means (32, 33) being provided to hold said sectors relative to one another.

7. A machine according to claim 6, **characterized in that** the non-magnetic spacer is constituted by a covering carried by the shaft (A).

8. A machine according to claim 6, **characterized in that** the spacer has dovetail shoulders.

9. A machine according to claim 6 or 7, **characterized in that** said means comprise end plates (33) made of a non-magnetic material, which end plates co-operate with magnetic tie rods passing through the laminations.

10. A machine according to any preceding claim, **characterized in that** each of the slots (23) that receive the magnets (27) is terminated at its end that is nearest to the rotor by an enlarged opening (34) of curved shape.

11. A machine according to claim 10, **characterized in that** such an end opening has a shape that presents folded-over portions (34a) on either side of the magnet received in the slot that it terminates.

12. A machine according to claim 2, **characterized in that** the edges of the holes (28) and of the slots (23) of the rotor that receive the magnets (27) are substantially parallel over a certain portion.

13. An alternator or starter alternator for a motor vehicle, **characterized in that** it is constituted by a machine according to any one of claims 1 to 12.

## Patentansprüche

1. Elektrische Maschine mit einem Stator (1) und einem Rotor (2), wobei der Stator wenigstens eine in wenigstens einem Nutenpaar (13) aufgenommene Ankerwicklung (14) umfasst, während der Rotor wenigstens zwei aufeinanderfolgende Erregermagnete umfasst, die im Rotor zwei Magnetflüsse erzeugen, die tangential entlang der Rotorstruktur Komponenten mit entgegengesetzten Richtungen haben, wobei der besagte Rotor zwischen diesen beiden Magneten eine geradzahlige Anzahl von Nuten aufweist, die zwischen ihnen liegende Schenkelpole definieren und in denen Endstücke einer Wicklung/von Wicklungen aufgenommen sind, die gespeist werden können, um zusammen mit den Magneten Wechselpole zu definieren, **da**- **durch gekennzeichnet**, dass jede der Nuten (23), welche die Endstücke einer Wicklung/von Wicklungen (26) aufnehmen, nur durch ein einziges Endstück oder mehrere Endstücke belegt sind, die um ein und denselben Schenkelpol gewickelt sind, und dass die Welle (A) des Rotors aus einem magnetischen Werkstoff besteht, wobei die besagte Maschine in der Nähe der besagten Welle (A) und der Magnete (27) wenigstens einen nichtmagnetischen Bereich (28, 28a; 30) umfasst, der die Streuflüsse zur Rotorwelle hin minimiert oder aufhebt.

2. Maschine nach Anspruch 1, **dadurch gekennzeichnet**, das s das Gehäuse des Rotors eine Mehrzahl von Löchern (28, 28a) aufweist, die sich in der Nähe der Rotorwelle erstrecken und die zwischen den Magneten (27) verteilt sind, wobei diese Löcher (28, 28a) nichtmagnetische Bereiche bilden, die beiderseits der Magnete Verengungsflächen definieren, welche die Flussverluste zur Welle hin begrenzen.

3. Maschine nach Anspruch 2, **dadurch gekennzeichnet, dass** sie zwischen zwei aufeinanderfolgenden Magneten (27) ein einziges Loch (28) enthält, das eine längliche Form aufweist.

4. Maschine nach Anspruch 2, **dadurch gekennzeichnet, dass** sie mehrere aufeinanderfolgende Löcher (28a) zwischen zwei Magneten (27) enthält.

5. Maschine nach Anspruch 1, **dadurch gekennzeichnet, dass** ein rohrförmiges nichtmagnetisches Zwischenelement (30) zwischen der Welle (A) und den Magneten eingefügt ist.

6. Maschine nach Anspruch 5, **dadurch gekennzeichnet, dass** die Bleche, die das Gehäuse des Rotors bilden, aus n winklig nebeneinander angeordneten unabhängigen Sektoren (31 a, 31 b) bestehen, wobei n die Anzahl von Permanentmagneten ist, wobei es durch Mittel (32, 33) ermöglicht wird, die besagten Sektoren im Verhältnis zueinander zu halten.

7. Maschine nach Anspruch 6, **dadurch gekennzeichnet, dass** das nichtmagnetische Zwischenelement aus einer an der Welle (A) angebrachten Beschichtung besteht.

8. Maschine nach Anspruch 6, **dadurch gekennzeichnet, dass** das Zwischenelement schwalbenschwanzförmige Schultern aufweist.

9. Maschine nach einem der Ansprüche 6 oder 7, **dadurch gekennzeichnet, dass** die besagten Mittel Abschlussflansche (33) aus einem nichtmagnetischen Werkstoff umfassen, wobei diese Flansche mit durch die Bleche hindurchgehenden magnetischen Stehbolzen zusammenwirken.

10. Maschine nach einem der vorangehenden Ansprüche, **dadurch gekennzeichnet, dass** die Nuten (23), welche die Magnete (27) aufnehmen, an ihrem dem Rotor am nächsten liegenden Ende in einer erweiterten Öffnung (34) mit gekrümmter Form enden.

11. Maschine nach Anspruch 10, **dadurch gekennzeichnet, dass** eine solche Abschlussöffnung eine Form hat, die Umbiegungen (34a) beiderseits des Magneten aufweist, der in der Nut, die sie abschließt, aufgenommen ist.

12. Maschine nach Anspruch 2, **dadurch gekennzeichnet, dass** die Ränder der Löcher (28) und der Nuten (23) des Rotors, welche die Magnete (27) aufnehmen, in etwa parallel auf einem bestimmten Abschnitt verlaufen.

13. Drehstromgenerator oder Anlassergenerator für Kraftfahrzeuge, **dadurch gekennzeichnet, dass** er aus einer Maschine nach einem der Ansprüche 1 bis 12 besteht.
